# FASCICULE DE BREVET EUROPEEN

(11) **EP 2 478 425 B1**
(45) Date de publication et mention de la délivrance du brevet: **04.04.2018**
(21) Numéro de dépôt: 10773643.1
(22) Date de dépôt: 16.09.2010
(51) Int. Cl.: B60K 37/06, G05G 5/03, G05G 1/08

(54) **DISPOSITIF DE COMMANDE ROTATIF À RETOUR HAPTIQUE**
ROTATIONSSTEUERUNGSVORRICHTUNG MIT HAPTISCHEM FEEDBACK
ROTARY CONTROL DEVICE WITH HAPTIC FEEDBACK

(30) Priorité: 16.09.2009 FR 0904427
(43) Date de publication de la demande: 25.07.2012
(73) Titulaire: DAV, 94046 Creteil Cedex (FR)
(72) Inventeur: VANHELLE, Stéphane, F-74970 Marignier (FR); TISSOT, Jean-Marc, F-74250 Viuz En Sallaz (FR)
(74) Mandataire: Pothmann, Karsten
(86) Numéro de dépôt international: PCT/FR2010/000623
(87) Numéro de publication internationale: WO 2011/033193

(56) Documents cités:
- US-A- 5 187 630
- US-A- 6 154 201
- US-A1- 2003 006 958
- US-A1- 2006 255 683

## Description

La présente invention est relative à un dispositif de commande rotatif multifonctions à retour haptique destiné à être monté dans un panneau de commande d'un véhicule automobile.

Plus précisément, un tel dispositif de commande peut trouver une application pour les commandes se trouvant au niveau de la console centrale et entre les deux sièges avant d'un véhicule automobile pour par exemple commander des fonctions de climatisation, d'un système audio, d'un système de téléphonie ou encore d'un système de navigation. Le dispositif de commande permet par exemple la navigation dans un menu déroulant ou le réglage direct de ces fonctions.

L'invention peut aussi être appliquée dans une région du véhicule appelée le dôme ou le plafonnier qui se situe au niveau de l'emplacement habituel du rétroviseur intérieur, pour par exemple commander des lumières intérieures, un verrouillage central, un toit ouvrant, les feux de détresse ou les lumières d'ambiance à l'intérieur du véhicule.

Le dispositif de commande peut également servir pour les commandes de lève-vitres, des commandes de positionnement des rétroviseurs extérieurs motorisés, des commandes multifonctions sur volant ou encore des commandes de déplacement de sièges motorisés.

Dans le domaine automobile, les commandes de divers organes électriques sont réalisées classiquement par des commutateurs / interrupteurs.

Toutefois, au vu du nombre croissant d'organes électriques à commander, des dispositifs de commande, dits « dispositif de commande multifonctions », c'est-à-dire aptes à commander plusieurs fonctions avec un seul organe de commande, sont de plus en plus utilisés du fait des avantages ergonomiques qui en résultent. Par exemple, à partir d'un seul organe de commande, réalisé sous la forme d'une molette rotative associé à un écran d'affichage, on peut naviguer dans des menus déroulants pour

La plupart des organes de commande multifonctions connus, sont réalisés par une molette de préhension faisant saillie du panneau de commande comme par exemple celle décrite dans le document US6154201. La molette est préhensible par au moins deux doigts de l'utilisateur, disposés en opposition, pour tourner dans un sens ou dans l'autre.

Les effets tactiles générés par l'actionnement de la molette, ainsi que le nombre de positions angulaires que peut prendre ladite molette, sont définis une fois pour toutes, et réalisés par des solutions conventionnelles mécaniques utilisant par exemple des rappels élastiques, une came et un doigt de guidage associé.

Pour augmenter le confort ergonomique et moderniser le design, les stylistes poussent de plus en plus dans le sens de la « dématérialisation » des interfaces, en rendant les interfaces moins complexes et moins visibles dans le véhicule. Cela permet d'éclaircir les panneaux de commande des véhicules en les simplifiant et en améliorant l'esthétique.

Pour cela, l'utilisation d'une technologie de capteur à surface tactile, peut être considérée comme un développement intéressant.

En effet, on connaît par exemple une technologie utilisant des résistances sensibles à la pression (également connu sous le nom capteur FSR pour « Force Sensing Resistor »). De tels capteurs permettent par exemple de réaliser des « tablettes digitalisantes » (dénomination anglaise "Digitizer pad"). D'autres technologies de capteurs à surface tactiles comprennent par exemple des capteurs matriciels de contact, ou des capteurs du type capacitif.

Les dispositifs de commande utilisant cette technologie, comportent un capteur à surface tactile fixe sur laquelle l'utilisateur glisse un doigt de commande pour se déplacer dans un menu déroulant associé, par exemple par un mouvement rotatif sur un capteur à surface tactile en forme d'anneau.

Le dispositif de commande présente alors un aspect simple, uniforme et plan, tout en permettant la commande d'une multitude de fonction.

Afin de permettre à l'utilisateur de se rendre compte en aveugle des commandes qu'il applique au niveau dudit dispositif, ce dernier est équipé d'un ou de plusieurs vibreurs pour générer un retour haptique au niveau du capteur à surface tactile. Ainsi, le conducteur sent au niveau du bout de son doigt de commande affleurant la surface tactile une vibration témoignant que sa commande a bien été prise en compte.

Toutefois, le saut de technologie visuel et tactile entre les organes de commande rotatifs massifs et saillants et les capteurs à surface tactile plans et fixes, peut sembler brutal aux utilisateurs.

En outre, le confort d'activation des interfaces à capteurs à surface tactile dépend de plusieurs facteurs, dont la qualité de l'état de surface du capteur mais aussi de la pression exercée par le doigt de l'utilisateur, du sens d'activation, de l'accroche du doigt de l'utilisateur (fonction de sa moiteur) ou encore pour les capteurs à surface tactile de type capacitif, de l'impossibilité de porter des gants pour l'activation dudit capteur tactile.

La présente invention vise à proposer un dispositif de commande rotatif à retour haptique multifonctions, notamment pour la navigation dans un menu déroulant, qui présente un confort ergonomique d'utilisation meilleur que ceux de l'état de la technique.

A cet effet, l'invention a pour objet un ensemble comportant un dispositif de commande rotatif à retour haptique définit par l'objet de la revendication 1.

Ainsi, un seul organe de commande rotatif et d'aspect plan, sert pour commander une pluralité de fonctions, telles que la climatisation, le système audio ou encore le système de navigation, avec des effets haptiques fonctions de la position angulaire de l'organe de commande rotatif. On peut ainsi sélectionner un effet haptique selon la fonction qui doit être commandée.

Une fois montée dans le panneau de commande, la surface de commande affleure la façade du véhicule qui présente alors un aspect uniforme et plan, comme le sont les capteurs à surface tactiles fixes.

En outre, le retour haptique créé d'une part, par l'entraînement en rotation de l'organe de commande et d'autre part, par le dispositif de génération de retour haptique, permet d'être ressenti manuellement par l'utilisateur comme un organe de commande classique traditionnel saillant.

Le dispositif de commande répond ainsi aux nouveaux critères ergonomiques des constructeurs de véhicules automobiles, requérants un organe de commande intégré dans le panneau de commande pouvant générer un retour haptique traditionnel.

Selon une ou plusieurs caractéristiques du dispositif de commande rotatif, prise seule ou en combinaison :
- ladite surface de commande présente une forme de disque ; la surface de commande en forme de disque permet une transmission optimisée des vibrations mécaniques,
- ladite surface de commande présente des renflements de guidages pour faciliter l'accroche du doigt de commande de l'utilisateur,
- ledit capteur angulaire comporte un capteur à surface tactile et au moins une entretoise fixée sous ladite surface de commande, pouvant glisser en rotation sur ledit capteur à surface tactile, ladite entretoise étant prévue pour pouvoir transmettre un appui de ladite surface de commande audit capteur de surface tactile ; le capteur angulaire présente alors un faible encombrement,
- ledit organe de commande rotatif est couplé audit dispositif de génération d'un retour haptique par un roulement à billes,
- ledit dispositif de commande rotatif comporte un dispositif de commutation destiné à être disposé dans le panneau de commande en dessous de ladite surface de commande,
- ledit organe de commande rotatif peut prendre une position enfoncée dans laquelle ladite surface de commande dudit organe de commande rotatif actionne ledit dispositif de commutation,
- ledit dispositif de commutation comporte un capteur à surface tactile et ledit dispositif de commande rotatif comporte au moins une entretoise fixée sous ladite surface de commande, ladite entretoise étant prévue pour pouvoir transmettre un appui de ladite surface de commande audit capteur de surface tactile,
- ledit capteur angulaire et ledit dispositif de commutation comportent un capteur de surface tactile commun ; ladite entretoise permet ainsi à la fois de réaliser la commutation du dispositif de commutation et ledit capteur angulaire ; le dispositif de commande obtenu est alors compact, robuste, de faible coût et la commutation est synchronisée avec la génération du retour haptique,
- ladite entretoise est élastique et présente une forme arrondie au niveau du contact avec ledit capteur de surface tactile,
- ledit dispositif de commande rotatif comporte un organe de commutation traversant ledit organe de commande rotatif de façon coaxiale, ledit organe de commutation pouvant actionner un dispositif de commutation disposé dans l'axe de rotation.

D'autres caractéristiques et avantages de l'invention ressortiront de la description suivante, donnée à titre d'exemple, sans caractère limitatif, en regard des dessins annexés sur lesquels :
- la figure 1 est une vue schématique en perspective d'un dispositif de commande,
- la figure 2 est une vue en coupe transversale du dispositif de la figure 1 monté dans un panneau de commande,
- la figure 3 représente une vue en coupe analogue à la figure 2 d'un dispositif de commande selon une première variante de réalisation et,
- la figure 4 représente une vue en coupe analogue à la figure 2 d'un dispositif de commande selon une deuxième variante de réalisation.

Sur ces figures, les éléments identiques portent les mêmes numéros de référence.

L'invention est relative à un dispositif de commande multifonctions électrique et plus particulièrement à un dispositif de commande rotatif à retour haptique, c'est-à-dire que la commande est opérée par l'entraînement en rotation d'un doigt d'un utilisateur et que ce dernier ressent un retour haptique, par exemple une vibration, au niveau du doigt de commande signalant la prise en compte de sa commande. Par vibration, on entend de façon large tout déplacement de va et vient, en particulier des micro-déplacements avec des amplitudes inférieurs à 0, 2 mm.

Un tel dispositif est destiné à être monté dans un panneau de commande d'un véhicule automobile par exemple pour la commande de sièges motorisés, des commandes de lève-vitres, des commandes des miroirs extérieurs motorisés, des commandes au niveau du plafonnier comme les commandes d'éclairage intérieur, les commandes d'ouverture d'un toit ouvrant, des commandes de climatisation, des commandes multifonctions de téléphonie, de navigation ou encore du système audio.

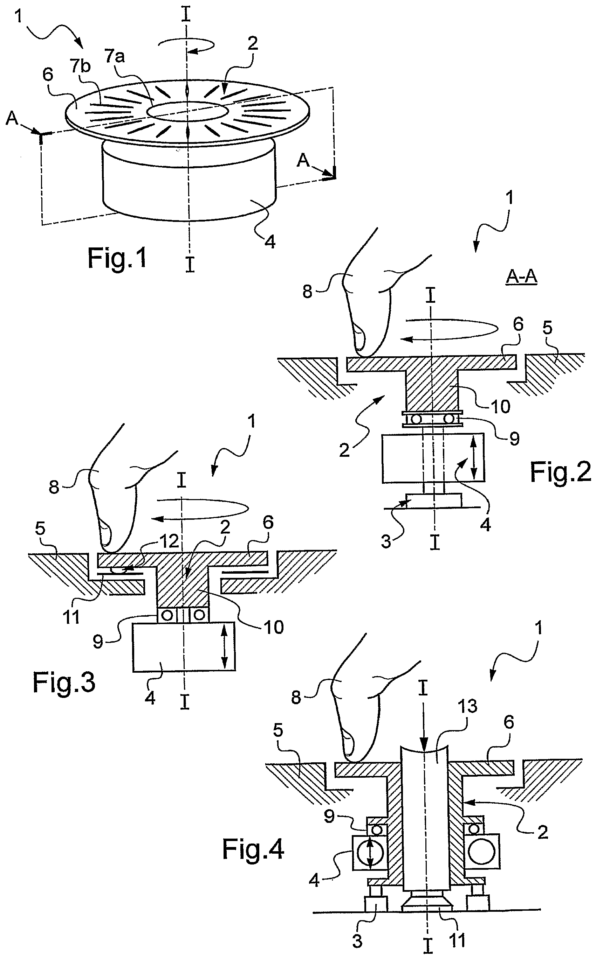

Les figures 1 à 4 représentent un dispositif de commande rotatif 1. Le dispositif de commande 1 comporte un organe de commande rotatif 2, un capteur angulaire 3a, 3b, 3c représentatif de la position angulaire dudit organe de commande rotatif 2 et un dispositif de génération d'un retour haptique 4.

L'organe de commande rotatif 2 est destiné à être monté rotatif autour d'un axe de rotation I-I dans un orifice correspondant ménagé dans un panneau de commande 5. L'organe de commande 2 est par exemple destiné à naviguer dans un menu déroulant d'un écran d'affichage dudit véhicule automobile (non représenté).

L'organe de commande rotatif 2 présente sur son extrémité supérieure, une surface de commande 6, pouvant être manipulée par un utilisateur, et de forme générale plane destinée à affleurer sensiblement ledit panneau de commande 5.

A l'état assemblé dans le panneau de commande 5 (figure 2), l'organe de commande 2 est au niveau de la surface extérieure du panneau de commande 5, et présente un aspect plan et uniforme. Cependant, le dispositif de commande 1 reste ergonomique car l'utilisateur actionne l'organe de commande 2 en rotation.

Ainsi, un seul organe de commande 2 rotatif et d'aspect plan, sert pour commander une pluralité de fonctions, telles que la climatisation, le système audio ou encore le système de navigation, avec des effets haptiques fonctions de la position de l'organe de commande.

Les effets haptiques peuvent en outre être choisis en fonction de la position angulaire de l'organe de commande. On peut donc les sélectionner selon la fonction qui doit être commandée.

Par exemple, et comme représenté sur les figures, la surface de commande 6 présente une forme de disque. On peut en outre prévoir que la surface de commande 6 présente en surface des renflements de guidages 7a, 7b, par exemple formant une nervure circulaire centrale 7a et des rainures radiales 7b régulièrement réparties, pour faciliter l'accroche du doigt de commande de l'utilisateur 8.

Selon un premier mode de réalisation représenté sur les figures 2 et 4, le capteur angulaire 3a, 3b comporte un encodeur rotatif monté sur l'organe de commande rotatif 2.

Selon un deuxième mode de réalisation représenté sur la figure 3, le capteur angulaire 3c comporte un capteur à surface tactile 11 et au moins une entretoise 12 fixée sous la surface de commande 6. L'entretoise 12 est prévue pour pouvoir transmettre un appui de la surface de commande 6 au capteur de surface tactile 11 et peut glisser en rotation sur le capteur à surface tactile 11. Par exemple, le capteur à surface tactile 11 utilise la technologie utilisant des résistances sensibles à la pression (également connu sous le nom capteur FSR pour « Force Sensing Resistor »). Pour faciliter son glissement en rotation, on prévoit en outre que l'entretoise 12 est élastique et présente une forme arrondie au niveau du contact avec le capteur de surface tactile 11. Le capteur angulaire 3c présente alors un faible encombrement et un faible coût.

La sortie du capteur angulaire 3a, 3b, 3c est destinée à être reliée à une unité de traitement du véhicule automobile (non représentée).

Le dispositif de génération d'un retour haptique 4 comporte par exemple un actionneur, tel qu'électromagnétique, (ou « voice call » en anglais) ou un actionneur piézoélectrique. Le dispositif de génération d'un retour haptique peut également utiliser la technologie magnéto rhéologique.

Le dispositif de génération d'un retour haptique 4 est monté fixe dans le panneau de commande 5 et est mécaniquement couplé à l'organe de commande rotatif 2 par une liaison rigide pour acheminer les vibrations mécaniques du dispositif de génération d'un retour haptique 4 vers la surface de commande 6 tout en permettant la rotation de l'organe de commande rotatif 2.

Par exemple, l'organe de commande rotatif 2 est couplé au dispositif de génération d'un retour haptique 4 fixe, par l'intermédiaire d'un roulement à billes 9. La surface de commande 6 s'étend par exemple par un tronçon 10 coaxial à l'axe de rotation I-I. Le tronçon 10 est par exemple réalisé sous la forme d'un cylindre dont une partie inférieure est amincie pour être logée dans le roulement à billes 9 et traverse le dispositif de génération d'un retour haptique 4 pour être connectée au capteur angulaire 3. Le tronçon 10 permet ainsi le couplage du dispositif de génération d'un retour haptique 4 avec la surface de commande 6. Une vibration peut ainsi être appliquée audit organe de commande 2 en réponse à une rotation de l'organe de commande 2 effectuée par un utilisateur, afin de permettre à l'utilisateur de se rendre compte en aveugle des commandes qu'il applique au dispositif 1.

La surface de commande 6 en forme de disque surmontant le tronçon 10 permet en outre une transmission optimisée des vibrations mécaniques. En effet, les vibrations cheminent le long du tronçon 10 vers le haut pour ensuite s'étendre radialement le long de la surface de commande 6.

On a constaté que cette disposition est particulièrement avantageuse du fait que les vibrations mécaniques s'étendent et se développent radialement vers l'extérieur. Ainsi, on évite les interférences pouvant diminuer l'amplitude des vibrations. On assure ainsi une propagation cohérente des ondes de surface comparable à la propagation des ondes de surface qui se développent lorsque l'on jette par exemple un caillou dans un plan d'eau.

En outre, le dispositif de génération d'un retour haptique 4 est destiné à être contrôlé par l'unité de traitement pour sélectionner une vibration prédéterminée parmi une pluralité de vibrations prédéfinies, de sorte que le dispositif de génération d'un retour haptique 4 applique la vibration sélectionnée à l'organe de commande 2 en réponse au signal de sortie du capteur angulaire 3. La vibration peut également être sélectionnée à l'organe de commande 2 en fonction de la navigation dans le menu déroulant.

Ainsi, la rotation de l'organe de commande 2, et/ou le sens de rotation et/ou la vitesse de rotation, sont détectés par le capteur angulaire 3a, 3b, 3c, qui le transmet par un signal de sortie représentatif à l'unité de traitement. Cette unité de traitement comporte par exemple un microcontrôleur pour déterminer à partir des signaux entrant, la position angulaire, le sens de rotation et/ou la vitesse angulaire de l'organe de commande 2. En fonction de la position, du sens de rotation et/ou de la vitesse détectés ainsi que des fonctions de la navigation validées dans le menu déroulant, l'unité de traitement transmet d'une part une commande à un organe ou élément électrique et/ ou électronique, et d'autre part sélectionne une vibration prédéterminée parmi une pluralité de vibrations prédéfinies et contrôle le dispositif de génération 4 pour qu'il applique la vibration sélectionnée à l'organe de commande 2.

A partir d'un seul dispositif de commande ergonomique, on peut alors naviguer dans des menus déroulants pour commander une pluralité de fonctions, telles que la climatisation, le système audio ou encore le système de navigation, avec des effets haptiques et des positions prédéfinies modulables en fonction des menus / fonctions activées.

On peut par exemple prévoir que la rotation de l'organe de commande 2 dans le sens horaire va augmenter le volume d'un autoradio d'un véhicule en procurant un effet haptique vibratoire ponctuel à chaque dépassement de seuils élémentaires présentant une amplitude de plus en plus importante. En outre, un déplacement dans le sens inverse procure une diminution du volume avec un effet haptique vibratoire ponctuel à chaque franchissement de seuils élémentaires présentant une amplitude de plus en plus faible. La distinction de diverses vitesses de rotation (par exemple vitesse faible / vitesse forte) permet par exemple de faire varier l'augmentation ou la diminution du volume d'un facteur correspondant à l'augmentation ou à la diminution du volume avec un nouvel effet haptique vibratoire constant. Puis, lorsque l'utilisateur navigue dans un autre menu, par exemple, relatif au réglage de paramètres de climatisation, la rotation de l'organe de commande génère d'autres commandes avec d'autres effets haptiques spécifiques. Par exemple, un effet haptique permet de faire varier le couple résistant à la rotation de l'organe de commande 2.

Selon une première variante de réalisation, le dispositif de commande 1 comporte un dispositif de commutation destiné à être disposé dans le panneau de commande 5 en dessous de la surface de commande 6. Le dispositif de commutation comporte par exemple un interrupteur relié à l'unité de traitement. L'actionnement du dispositif de commutation permet par exemple de valider une fonction choisie dans le menu déroulant, par un appui sur la surface de commande 6 axialement à l'axe I-I.

Selon un premier exemple non représenté, l'organe de commande 2 peut prendre lui-même une position enfoncée dans laquelle la surface de commande 6 de l'organe de commande 2 actionne le dispositif de commutation.

Selon un deuxième exemple illustré par la figure 3, le dispositif de commutation 14a comporte un capteur à surface tactile 11. Par exemple, le capteur à surface tactile 11 utilise la technologie utilisant des résistances sensibles à la pression (également connu sous le nom capteur FSR pour « Force Sensing Resistor »). Dans le cas d'une surface de commande 6 en forme de disque, on prévoit par exemple un capteur de surface tactile de forme correspondante en anneau disposée en dessous de la surface de commande 6.

En outre, le dispositif 1 comporte au moins une entretoise 12 fixée sous la surface de commande 6. L'entretoise 12 est prévue pour pouvoir transmettre un appui de la surface de commande 6 au capteur de surface tactile 11. Pour faciliter son glissement en rotation, on prévoit en outre que l'entretoise 12 est élastique et présente une forme arrondie au niveau du contact avec le capteur de surface tactile 11.

Comme on peut le voir sur la figure 3, le capteur angulaire 3c et le dispositif de commutation 14a comportent un capteur de surface tactile 11 commun. L'entretoise 12 permet ainsi à la fois de réaliser la commutation du dispositif de commutation 14a et la mesure du capteur angulaire 3c.

Ainsi, la rotation de l'organe de commande 2 entraîne la rotation de l'entretoise 12 sur la surface du capteur tactile 11. Par exemple, un appui léger peut être détecté pour réaliser une mesure angulaire représentative de la position angulaire de l'organe de commande rotatif 2 et un appui plus fort est caractéristique d'une validation au même niveau d'emplacement du doigt de commande 8 sur l'organe de commande 2.

On obtient ainsi un dispositif de commande 1 compact, robuste et de faible coût et dont la commutation est synchronisée avec la génération du retour haptique.

Selon une deuxième variante de réalisation représentée en figure 4, le dispositif 1 comporte un organe de commutation 13 traversant l'organe de commande rotatif 2 de façon coaxiale, l'organe de commutation 13 pouvant actionner un dispositif de commutation 14b disposé dans l'axe de rotation I-I.

Dans cette variante de réalisation, la surface de commande 6 s'étend par exemple par un tronçon cylindrique 10 coaxial à l'axe de rotation I-I et creux pour permettre le passage de l'organe de commutation 13. Le tronçon 10 est connecté au capteur angulaire 3b disposé autour de l'organe de commutation 13 pour être monté sur le panneau de commande 5.Le dispositif de commande rotatif multifonctions présente ainsi un aspect intégré dans le panneau de commande, avec un bon confort ergonomique pour l'utilisateur et dont les effets haptiques et les positions angulaires prédéfinies sont largement modulables en fonction des menus / fonctions activées.

## Revendications

1. Ensemble comportant un dispositif de commande rotatif à retour haptique et un panneau de commande (5) de véhicule automobile, ledit dispositif de commande rotatif (1) étant monté dans ledit panneau de commande et comportant :
- un organe de commande rotatif (2),
- un capteur angulaire (3a, 3b, 3c) représentatif de la position angulaire dudit organe de commande rotatif (2) et dont la sortie est reliée à une unité de traitement dudit véhicule automobile,
- un dispositif de génération d'un retour haptique (4) couplé audit organe de commande rotatif (2) pour appliquer une vibration audit organe de commande rotatif (2),
ledit organe de commande rotatif (2) présente sur son extrémité supérieure une surface de commande (6), pouvant être manipulée par un utilisateur, ladite surface de forme générale plane affleurant sensiblement ledit panneau de commande et ledit dispositif de génération d'un retour haptique (4) est contrôlé par ladite unité de traitement pour sélectionner une vibration prédéterminée parmi une pluralité de vibrations prédéfinies, de sorte que ledit dispositif de génération (4) applique la vibration sélectionnée audit organe de commande rotatif (2) en réponse au signal de sortie dudit capteur angulaire (3a, 3b, 3c).

2. Ensemble selon la revendication 1, **caractérisé en ce que** ladite surface de commande (6) présente une forme de disque.

3. Ensemble selon la revendication 1 ou 2, **caractérisé en ce que** ladite surface de commande (6) présente des renflements de guidages (7a, 7b).

4. Ensemble selon l'une des revendications précédentes, **caractérisé en ce que** ledit capteur angulaire (3c) comporte un capteur à surface tactile (11) et au moins une entretoise (12) fixée sous ladite surface de commande (6), pouvant glisser en rotation sur ledit capteur à surface tactile (11), ladite entretoise (12) étant prévue pour pouvoir transmettre un appui de ladite surface de commande (6) audit capteur de surface tactile (11).

5. Ensemble selon l'une des revendications précédentes, **caractérisé en ce que** ledit organe de commande rotatif (2) est couplé audit dispositif de génération d'un retour haptique par un roulement à billes.

6. Ensemble selon l'une des revendications précédentes, **caractérisé en ce que** ledit dispositif de commande rotatif comporte un dispositif de commutation (14a, 14b) disposé dans le panneau de commande (5) en dessous de ladite surface de commande (6).

7. Ensemble selon la revendication 6, **caractérisé en ce que** ledit organe de commande rotatif (2) peut prendre une position enfoncée dans laquelle ladite surface de commande (6) dudit organe de commande rotatif (2) actionne ledit dispositif de commutation.

8. Ensemble selon la revendication 6, **caractérisé en ce que** ledit dispositif de commutation (14a) comporte un capteur à surface tactile (11) et au moins une entretoise (12) fixée sous ladite surface de commande (6), ladite entretoise (12) étant prévue pour pouvoir transmettre un appui de ladite surface de commande (6) audit capteur de surface tactile (11).

9. Ensemble selon la revendication 8, prise ensemble avec la revendication 4, **caractérisé en ce que** ledit capteur angulaire (3c) et ledit dispositif de commutation (14a) comportent un capteur de surface tactile (11) commun.

10. Ensemble selon la revendication 9, **caractérisé en ce que** ladite entretoise (12) est élastique et présente une forme arrondie au niveau du contact avec ledit capteur de surface tactile (11).

11. Ensemble selon l'une des revendications 1 à 5, **caractérisé en ce que** ledit dispositif de commande rotatif comporte un organe de commutation (13) traversant ledit organe de commande rotatif (2) de façon coaxiale, ledit organe de commutation (13) pouvant actionner un dispositif de commutation (14b) disposé dans l'axe de rotation (I-I).

## Patentansprüche

1. Anordnung, umfassend eine Rotationssteuerungsvorrichtung mit haptischem Feedback und ein Bedienfeld (5) eines Kraftfahrzeugs, wobei die Rotationssteuerungsvorrichtung (1) in dem Bedienfeld befestigt ist und aufweist:
- ein Drehsteuerorgan (2),
- einen Winkelsensor (3a, 3b, 3c), der für die Winkelposition des Drehsteuerorgans (2) repräsentativ ist und dessen Ausgang mit einer Verarbeitungseinheit des Kraftfahrzeugs verbunden ist,
- eine Vorrichtung zum Erzeugen einer haptischen Rückmeldung (4), die mit dem Drehsteuerorgan (2) gekoppelt ist, um eine Schwingung an das Drehsteuerorgan (2) anzulegen,
das Drehsteuerorgan (2) weist an seinem oberen Ende eine Steuerfläche (6) auf, die von einem Benutzer betätigt werden kann, wobei die Fläche von allgemein ebener Form im Wesentlichen mit dem Bedienfeld fluchtet, und die Vorrichtung zum Erzeugen einer haptischen Rückmeldung (4) wird von der Verarbeitungseinheit gesteuert, um eine vorbestimmte Schwingung aus mehreren vordefinierten Schwingungen derart auszuwählen, dass die Vorrichtung zum Erzeugen (4) die ausgewählte Schwingung als Antwort auf das Ausgangssignal des Winkelsensors (3a, 3b, 3c) an das Drehsteuerorgan (2) anlegt.

2. Anordnung nach Anspruch 1, **dadurch gekennzeichnet, dass** die Steuerfläche (6) eine Scheibenform aufweist.

3. Anordnung nach Anspruch 1 oder 2, **dadurch gekennzeichnet, dass** die Steuerfläche (6) Führungswulste (7a, 7b) aufweist.

4. Anordnung nach einem der vorhergehenden Ansprüche, **dadurch gekennzeichnet, dass** der Winkelsensor (3c) einen Sensor mit berührungsempfindlicher Oberfläche (11) und mindestens einen Abstandshalter (12) aufweist, der unter der Steuerfläche (6) befestigt ist, der in Drehung auf dem Sensor mit berührungsempfindlicher Oberfläche (11) gleiten kann, wobei der Abstandshalter (12) vorgesehen ist, um eine Stütze von der Steuerfläche (6) an den Sensor mit berührungsempfindlicher Oberfläche (11) zu übertragen.

5. Anordnung nach einem der vorhergehenden Ansprüche, **dadurch gekennzeichnet, dass** das Drehsteuerorgan (2) durch ein Kugellager mit der Vorrichtung zum Erzeugen einer haptischen Rückmeldung verbunden ist.

6. Anordnung nach einem der vorhergehenden Ansprüche, **dadurch gekennzeichnet, dass** die Rotationssteuerungsvorrichtung eine Schaltvorrichtung (14a, 14b) aufweist, die in dem Bedienfeld (5) unter der Steuerfläche (6) angeordnet ist.

7. Anordnung nach Anspruch 6, **dadurch gekennzeichnet, dass** das Drehsteuerorgan (2) eine eingedrückte Position einnehmen kann, in der die Steuerfläche (6) des Drehsteuerorgans (2) die Schaltvorrichtung betätigt.

8. Anordnung nach Anspruch 6, **dadurch gekennzeichnet, dass** die Schaltvorrichtung (14a) einen Sensor mit berührungsempfindlicher Oberfläche (11) und mindestens einen Abstandshalter (12) aufweist, der unter der Steuerfläche (6) befestigt ist, wobei der Abstandshalter (12) vorgesehen ist, um eine Stütze von der Steuerfläche (6) an den Sensor mit berührungsempfindlicher Oberfläche (11) zu übertragen.

9. Anordnung nach Anspruch 8, in Verbindung mit Anspruch 4 genommen, **dadurch gekennzeichnet, dass** der Winkelsensor (3c) und die Schaltvorrichtung (14a) einen gemeinsamen Sensor mit berührungsempfindlicher Oberfläche (11) aufweisen.

10. Anordnung nach Anspruch 9, **dadurch gekennzeichnet, dass** der Abstandshalter (12) elastisch ist und eine abgerundete Form auf Ebene des Kontakts mit dem Sensor mit berührungsempfindlicher Oberfläche (11) aufweist.

11. Anordnung nach einem der Ansprüche 1 bis 5, **dadurch gekennzeichnet, dass** die Rotationssteuerungsvorrichtung ein Schaltorgan (13) aufweist, das das Drehsteuerorgan (2) koaxial durchquert, wobei das Schaltorgan (13) eine Schaltvorrichtung (14b) betätigen kann, die in der Drehachse (I-I) angeordnet ist.

## Claims

1. Assembly comprising a rotary control device with haptic feedback and a control panel (5) of a motor vehicle, said rotary control device (1) being mounted in said control panel and comprising:
- a rotary control member (2),
- an angular sensor (3a, 3b, 3c) representative of the angular position of said rotary control member (2) and the output of which is linked to a processing unit of said motor vehicle,
- a device for generating haptic feedback (4) coupled to said rotary control member (2) to apply a vibration to said rotary control member (2),
said rotary control member (2) has, on its top end, a control surface (6), which can be manipulated by a user, said surface of generally planar form being substantially flush with said control panel and said device for generating haptic feedback (4) is intended to be controlled by said processing unit to select a predetermined vibration from a plurality of predetermined vibrations, so that said generation device (4) applies the selected vibration to said rotary control member (2) in response to the output signal of said angular sensor (3a, 3b, 3c).

2. Assembly according to Claim 1, **characterized in that** said control surface (6) is in the form of a disk.

3. Assembly according to Claim 1 or 2, **characterized in that** said control surface (6) has guiding bulges (7a, 7b).

4. Assembly according to one of the preceding claims, **characterized in that** said angular sensor (3c) comprises a sensor with touch-sensitive surface (11) and at least one spacer (12) fixed under said control surface (6), capable of sliding in rotation on said sensor with touch-sensitive surface (11), said spacer (12) being provided to be able to transmit a pressure on said control surface (6) to said touch-sensitive surface sensor (11).

5. Assembly according to one of the preceding claims, **characterized in that** said rotary control member (2) is coupled to said device for generating haptic feedback via a ball race.

6. Assembly according to one of the preceding claims, **characterized in that** said rotary control device comprises a switching device (14a, 14b) positioned in the control panel (5) under said control surface (6).

7. Assembly according to Claim 6, **characterized in that** said rotary control member (2) can take a depressed position in which said control surface (6) of said rotary control member (2) actuates said switching device.

8. Assembly according to Claim 6, **characterized in that** said switching device (14a) comprises a sensor with touch-sensitive surface (11) and at least one spacer (12) fixed under said control surface (6), said spacer (12) being provided to be able to transmit a pressure on said control surface (6) to said touch-sensitive surface sensor (11).

9. Assembly according to Claim 8, taken together with Claim 4, **characterized in that** said angular sensor (3c) and said switching device (14a) comprise a common touch-sensitive surface sensor (11).

10. Assembly according to Claim 9, **characterized in that** said spacer (12) is elastic and has a rounded form at the level of the contact with said touch-sensitive surface sensor (11).

11. Assembly according to one of Claims 1 to 5, **characterized in that** said rotary control device comprises a switching member (13) passing through said rotary control member (2) in a coaxial manner, said switching member (13) being able to actuate a switching device (14b) positioned in the rotation axis (I-I).
